# EUROPEAN PATENT APPLICATION

(11) **EP 3 634 025 A1**
(43) Date of publication of application: **08.04.2020**
(21) Application number: 18810809.6
(22) Date of filing: 23.03.2018
(51) Int. Cl.: H04W 16/14, H04W 84/12

(54) **COMMUNICATION DEVICE AND COMMUNICATION SYSTEM**

(30) Priority: 02.06.2017 JP 2017110035
(71) Applicant: Sony Corporation, Tokyo 108-0075 (JP)
(72) Inventor: HIRATA, Ryuichi, Tokyo 108-0075 (JP); MORIOKA, Yuichi, Tokyo 108-0075 (JP); TANAKA, Yusuke, Tokyo 108-0075 (JP)
(74) Representative: D Young & Co LLP
(86) International application number: PCT/JP2018/011767
(87) International publication number: WO 2018/220962

(57) **Abstract**

Interference with another system can be appropriately avoided.

Provided is a communication apparatus including: a receiver that performs reception of power from another system; a determination unit that determines presence or absence of interference with the other system on the basis of the reception; and a transmitter that transmits first interference information including information relating to the interference to another communication apparatus.

## Description

### TECHNICAL FIELD

The present disclosure relates to a communication apparatus and a communication system.

### BACKGROUND ART

A wireless LAN system conforming to IEEE 802.11 performs communication using an unlicensed frequency band. In some cases, interference occurs due to an influence of another wireless communication system (hereinafter referred to as "another system") that uses the unlicensed frequency band and uses a communication scheme different from a communication scheme of the wireless LAN system. More specifically, in a case where a frequency band that the wireless LAN system uses in communication overlaps a frequency band that another system uses in communication, signals transmitted from the respective systems interfere with each other in some cases. In recent years, a variety of methods for reducing an influence of such interference have been developed.

For example, Patent Document 1 discloses a technique for performing carrier sensing by using a plurality of thresholds, detecting interference from another system on the basis of a comparison in the time when reception power that exceeds each of the plurality of thresholds has been detected, and avoiding the interference. Furthermore, Patent Document 2 discloses a technique for determining the transmission power or the like of each of a plurality of terminals on the basis of reports about the measurement of interference that a base station has obtained from the plurality of terminals.

### CITATION LIST

### PATENT DOCUMENT

Patent Document 1: Japanese Patent Application Laid-Open No. 2013-183221
Patent Document 2: Japanese National Publication of International Patent Application No. 2015-534418

### SUMMARY OF THE INVENTION

### PROBLEMS TO BE SOLVED BY THE INVENTION

However, interference with another system has failed to be appropriately prevented in some cases. For example, in the technique of Patent Document 1, a transmission source apparatus that is about to transmit a signal can avoid interference detected by the local apparatus, but fails to grasp an interference state of a transmission destination apparatus. Thus, there is a possibility that the transmission destination apparatus receives an influence of interference and this will result in a failure in communication.

Accordingly, the present disclosure has been made in view of the foregoing, and the present disclosure provides a communication apparatus and a communication system that are capable of appropriately preventing interference with another system and that are novel and have been improved.

### SOLUTIONS TO PROBLEMS

According to the present disclosure, there is provided a communication apparatus including: a receiver that performs reception of power from another system; a determination unit that determines presence or absence of interference with the other system on the basis of the reception; and a transmitter that transmits first interference information including information relating to the interference to another communication apparatus.

Furthermore, according to the present disclosure, there is provided a communication apparatus including: a receiver that performs reception of power from another system, and receives first interference information including information relating to the interference from another communication apparatus that determines presence or absence of interference with the other system on the basis of the reception; and a controller that controls communication on the basis of the first interference information.

Furthermore, according to the present disclosure, there is provided a communication system including a first communication apparatus and a second communication apparatus. The first communication apparatus includes: a first receiver that performs reception of power from another system; a determination unit that determines presence or absence of interference with the other system on the basis of the reception; and a transmitter that transmits first interference information including information relating to the interference to the second communication apparatus. The second communication apparatus includes: a second receiver that receives the first interference information from the first communication apparatus; and a controller that controls communication on the basis of the first interference information.

### EFFECTS OF THE INVENTION

As described above, according to the present disclosure, interference with another system can be appropriately prevented.

Note that the effect described above is not necessarily restrictive, and any of the effects described in the description or other effects that can be grasped from the description may be exhibited in addition to the effect described above or instead of the effect described above.

### BRIEF DESCRIPTION OF DRAWINGS

Fig. 1 is a diagram explaining the background of the present disclosure.
Fig 2 is a diagram illustrating a configuration of a communication system according to the present disclosure.
Fig. 3 is a diagram illustrating an example of a method for distinguishing (identifying) another system or an apparatus serving as an interference source.
Fig. 4 is a diagram illustrating an example of a method for distinguishing (identifying) another system or an apparatus serving as an interference source.
Fig. 5 is an example of a block diagram illustrating a functional configuration of a communication apparatus.
Fig. 6 is a diagram illustrating a portion of a format of a frame in which interference information is stored.
Fig. 7 is a diagram illustrating a portion of a format of a frame that makes a request for interference information.
Fig. 8 is a flowchart illustrating an example of an operation of a communication apparatus in a first example.
Fig. 9 is a flowchart illustrating an example of an operation of a communication apparatus in a second example.
Fig. 10 is a diagram for describing an example of a case where a third example is applied.
Fig. 11 is a flowchart illustrating an example of an operation of a communication apparatus in the third example.
Fig. 12 is a block diagram illustrating an example of a schematic configuration of a smartphone.
Fig. 13 is a block diagram illustrating an example of a schematic configuration of a car navigation device.
Fig. 14 is a block diagram illustrating an example of a schematic configuration of a wireless access point.

### MODE FOR CARRYING OUT THE INVENTION

A preferred embodiment of the present disclosure is described in detail below with reference to the drawings. Note that, in the description and the drawings, components that have substantially the same functional configuration are denoted by the same reference sign, and therefore a duplicate description is omitted.

Note that description is provided in the order described below.
1. Background
2. Outline of communication system
   2-1. Configuration of communication system
   2-2. Functional outline
   2-3. Functional configuration of apparatus
   2-4. Information to be communicated
3. First example
4. Second example
5. Third example
6. Application examples
7. Conclusion

### <1. Background>

As described above, in a case where a frequency band that a wireless LAN system uses in communication overlaps a frequency band that another system uses in communication, signals transmitted from the respective systems interfere with each other in some cases.

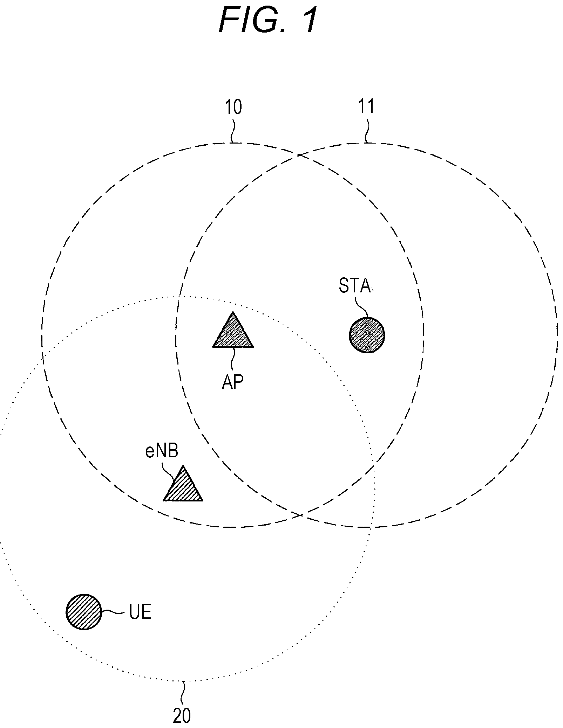

Here, the background of the present disclosure is described with reference to Fig. 1. It is assumed that a wireless LAN system (for example, a wireless LAN system conforming to IEEE 802.11) that is configured by an access point (AP) and a station (STA) and another system that is configured by an evolved node B (eNB) and user equipment (UE) coexist, as illustrated in Fig. 1.

Basically, each apparatus can detect communication performed by each other's system only on the basis of power. More specifically, AP and STA that configure the wireless LAN system can only detect communication performed by eNB and UE that configure another system only on the basis of power. The similar is applied to eNB and UE that configure the other system.

Due to the circumstances described above, in a case where a hidden-terminal state has occurred between both systems, there is a possibility that communication performance will deteriorate. For example, in Fig. 1, it is assumed that STA in the wireless LAN system and eNB in the other system have what is called a hidden-terminal relationship. In other words, it is assumed that there is a relationship in which STA fails to detect a signal transmitted from eNB and eNB fails to detect a signal transmitted from STA. A case is examined where STA transmits a signal to AP under this situation.

If eNB can recognize Clear to Send (CTS), STA transmits Request to Send (RTS) to AP before STA communicates a signal, and when AP that has received RTS transmits CTS to STA, eNB receives CTS, so that eNB can appropriately stand by while STA is transmitting a signal.

However, eNB fails to recognize CTS (and RTS), and basically, eNB can detect only power with respect to communication of the wireless LAN system, as described above. Accordingly, there is a possibility that eNB will transmit a signal while STA is transmitting a signal, interference will occur due to each other's signals, and this will cause AP to fail to receive the signal from STA.

Furthermore, in the technique of Patent Document 1 listed above, a transmission source apparatus that is about to transmit a signal can avoid interference detected by the local apparatus, but fails to grasp an interference state of a transmission destination apparatus. Thus, there is a possibility that the transmission destination apparatus receives an influence of interference and this will result in a failure in communication.

Moreover, in the technique of Patent Document 2 listed above, in a case where a communication apparatus receives interference from a plurality of other systems or a plurality of terminals, the communication apparatus fails to recognize the plurality of other systems or the plurality of terminals while distinguishing (identifying) the plurality of other systems or the plurality of terminals from each other.

A person of the present disclosure has created the present disclosure in view of the circumstances described above. A communication apparatus and a communication system according to the present disclosure are described in more detail below.

### <2. Outline of communication system>

The background of the present disclosure has been described above. Next, the outline of the communication system according to the present disclosure is described.

### (2-1. Configuration of communication system)

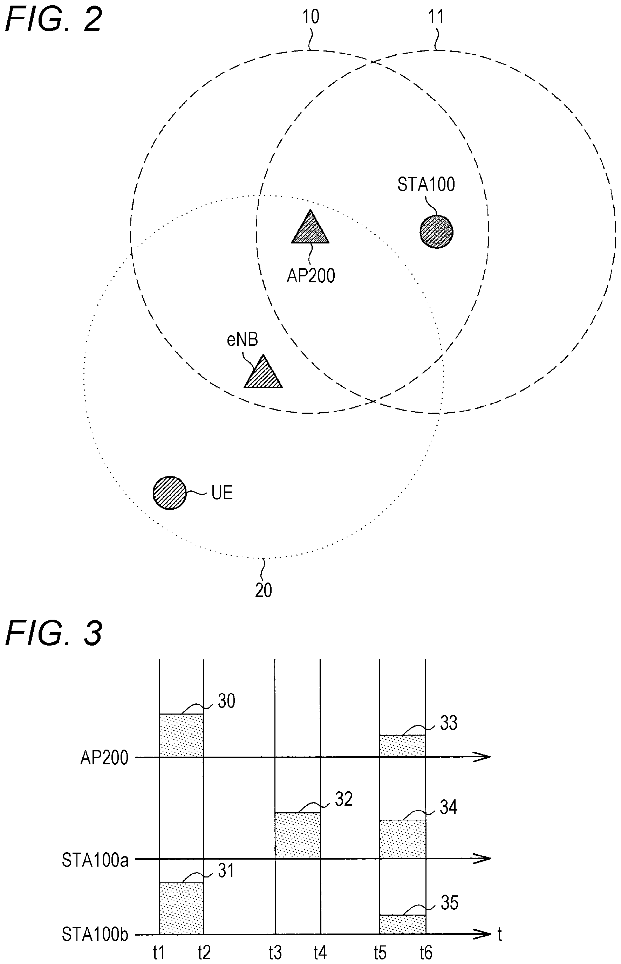

First, a configuration of the communication system according to the present disclosure is described with reference to Fig. 2. As illustrated in Fig. 2, the communication system according to the present disclosure is a wireless LAN system (for example, a wireless LAN system conforming to IEEE 802.11), and includes AP 200 and STA 100. Another system that includes eNB and UE exists near the wireless LAN system, and it is assumed that STA 100 in the wireless LAN system and eNB in the other system have what is called a hidden-terminal relationship, similarly to Fig. 1. Note that Fig. 2 is only an example, and the present disclosure is not limited to this. For example, there may be a plurality of respective apparatuses in the wireless LAN system or the other system. Furthermore, arbitrary terminals have a hidden-terminal relationship (for example, AP 200 and UE may have a hidden-terminal relationship).

AP 200 is a communication apparatus that functions as a base station in the wireless LAN system. For example, AP 200 is connected to an external network so as to provide STA 100 with communication with the external network. For example, AP 200 is connected to the Internet, and provides communication between STA 100 and an apparatus on the Internet or an apparatus connected via the Internet. A communication scheme, a type, a shape, or the like of AP 200 is not particularly limited.

STA 100 is a communication apparatus that functions as a slave unit in the wireless LAN system and performs communication with AP 200. For example, STA 100 may be an arbitrary apparatus such as a display having a display function, a memory having a storage function, a keyboard and a mouse that have an input function, a speaker having a sound output function, or a smartphone having a function of performing advanced calculation processing. A communication scheme, a type, a shape, or the like of STA 100 is not particularly limited.

eNB is a communication apparatus that functions as a base station in the other system, and UE is a communication apparatus that functions as a slave unit in the other system. Communication schemes, types, shapes, or the like of eNB and UE are not particularly limited. For example, the other system may be licensed-assisted access (LAA) that has been formulated by the 3rd generation partnership project (3GPP) and that serves as a wireless communication system that uses an unlicensed frequency band, and eNB and UE may perform communication by using a communication scheme conforming to LAA.

### (2-2. Functional outline)

Next, the functional outline of the communication system according to the present disclosure is described.

AP 200 or STA 100 (hereinafter referred to as a "communication apparatus according to the present disclosure" or simply referred to as a "communication apparatus" in some cases) determines the presence or absence of interference from another system by receiving power from the other system, and shares information relating to the interference (hereinafter referred to as "interference information") with another communication apparatus. Note that by using tunneled direct link setup (TDLS) may be used for STAs 100 to share the interference information.

Here, the interference information refers to, for example, information such as a reception power value (stated another way, the intensity of interference), the time when the power has been received (a reception start time, a reception end time, or the like; stated another way, an interference occurrence time), a direction from which power has been received (stated another way, a direction of an interference source), or the attribute of interference. Note that the content of the interference information is not limited to the above. Furthermore, information relating to interference with another wireless LAN system rather than interference with another system may also be shared.

With this arrangement, a communication apparatus that has received the interference information can grasp the state of interference that an apparatus serving as a providing source of the interference information is receiving. Note that a communication apparatus may share interference information transmitted from another communication apparatus with yet another communication apparatus. For example, AP 200 may share interference information from STA 100 with another STA 100. With this arrangement, a communication apparatus that has received interference information can grasp the state of interference that each of various communication apparatuses that are located in a wide range is receiving.

Furthermore, in a case where there is a plurality of other systems that has generated interference, a communication apparatus (this may be any of an apparatus that has transmitted interference information and an apparatus that has received the interference information) can distinguish (identify) the plurality of other systems or apparatuses serving as an interference source in the plurality of other systems from each other.

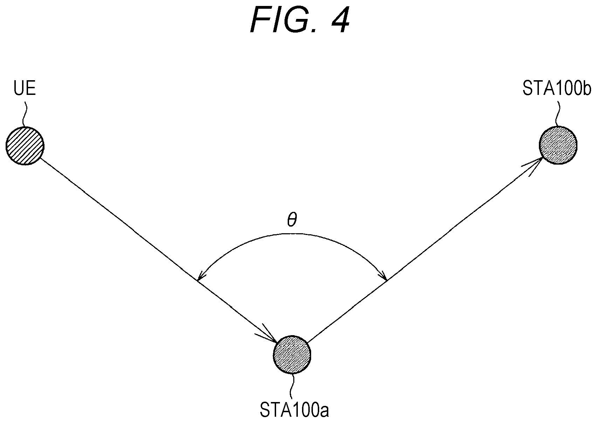

Here, an example of a method for distinguishing (identifying) another system or an apparatus serving as an interference source in the other system is described with reference to Figs. 3 and 4. It is assumed, for example, that a situation illustrated in Fig. 3 has been clarified on the basis of pieces of interference information that have been collected by AP 200, STA 100a, and STA 100b. In Fig. 3, a horizontal axis indicates time (t), a start time (t1, t3, or t5) and an end time (t2, t4, or t6) of interference are indicated, and a width in a vertical axis direction of each interference indicates the magnitude of a reception power value. Note that all of the pieces of information illustrated in Fig. 3 are pieces of information relating to interference with another system, and information relating to communication in a wireless LAN system is not illustrated.

Interference 30 detected by AP 200 and interference 31 detected by STA 100b have substantially the same start time and end time of interference, and therefore interference 30 and interference 31 can be estimated to be interference from the same interference source. Furthermore, interference 32 detected by STA 100a has not been detected by AP 200 and STA 100b, and therefore the interference 32 can be estimated to be interference from an interference source different from an interference source of interference 30 and interference 31. Moreover, interference 33 to interference 35 have been detected by all of AP 200, STA 100a, and STA 100b, and therefore the interference 33 to the interference 35 can be estimated to be interference from an interference source different from all of the interference sources of the interference 30 to the interference 32. A communication apparatus can distinguish (identify) another system that has generated interference or an apparatus serving as an interference source in the other system on the basis of the estimation described above.

Note that the method described above is only an example. For example, in a case where each apparatus in a wireless LAN system or each apparatus in another system moves, an interference state changes with the lapse of time. Thus, the method described above is not suitable in some cases. A communication apparatus according to the present disclosure can also distinguish (identify) another system that has generated interference or an apparatus serving as an interference source in the other system in consideration of the movement of each of the apparatuses, or the like.

For example, a communication apparatus grasps the position of each of the apparatuses in a wireless LAN system by using a predetermined method. For example, a communication apparatus grasps the position of each of the apparatuses in a wireless LAN system, for example, by storing information relating to the position of the local apparatus (or an apparatus other than the local apparatus) in a transmission signal or by grasping a separation distance between apparatuses on the basis of a known transmission power value and reception power value and grasping a direction of the reception of a signal by using a directional antenna or the like to grasp the position of an apparatus that has transmitted the signal.

Then, if an apparatus serving as an interference source in another system moves, interference information collected by each of the apparatuses changes according to the pattern (a movement route, the speed of movement, or the like) of movement. The communication apparatus according to the present disclosure recognizes the movement pattern of an apparatus serving as an interference source on the basis of the pattern of a change in interference information collected by each of the apparatuses, so that the communication apparatus according to the present disclosure can distinguish (identify) the apparatus serving as an interference source and moving from another apparatus. Note that the method described above is only an example.

Furthermore, the communication apparatus can distinguish (identify) another system that has generated interference or an apparatus serving as an interference source in the other system by also using information relating to a direction from which power has been received. For example, in a case where STA 100a has received power from UE in another system, as illustrated in Fig. 4, STA 100a reports an angle θ formed by a direction from which the power has been received and a direction in which STA 100b serving as a transmission destination of interference information is located, as the interference information to STA 100b.

With this arrangement, in a case where STA 100b has grasped the position of STA 100a, STA 100b can estimate a direction or a position in which UE serving as an interference source exists, and therefore this estimation result can be effectively utilized to distinguish (identify) an apparatus serving as an interference source. Furthermore, STA 100b can estimate a separation distance between STA 100a and UE by also using a reception power value (a power value that STA 100a has received from UE) that is included in the interference information. Therefore, the accuracy of the estimation of the position of UE can be further improved.

Then, the communication apparatus controls communication in the wireless LAN system on the basis of the interference information. For example, the communication apparatus performs changing various types of settings relating to transmission, changing a transmission destination, changing various types of settings relating to reception, or the like on the basis of the interference information. By performing these processes, the communication apparatus can suppress the occurrence of interference, or can reduce an influence of interference. Details are described later.

Furthermore, STA 100 and AP 200 can have a similar function. Therefore, STA 100 may be referred to as a "first communication apparatus", and AP 200 may be referred to as a "second communication apparatus". Conversely, STA 100 may be referred to as a "second communication apparatus", and AP 200 may be referred to as a "first communication apparatus". Furthermore, STA 100 and AP 200 perform various types of processing by using interference information collected by the local apparatus and interference information shared with another communication apparatus. Respective pieces of interference information may be referred to as "first interference information" and "second interference information" in a distinguished manner.

### (2-3. Functional configuration of apparatus)

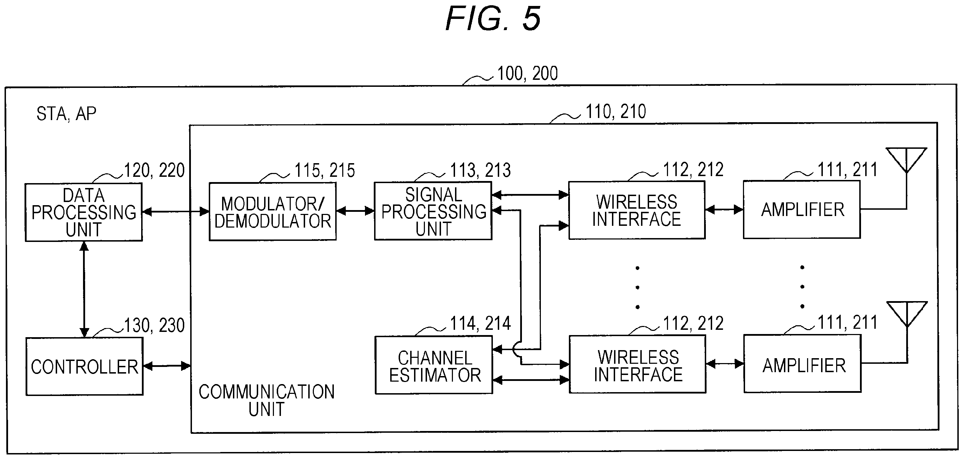

Next, an example of the functional configurations of AP 200 and STA 100 is described with reference to Fig. 5. Note that AP 200 and STA 100 can include functional configurations similar to each other. Therefore, only a functional configuration of AP 200 is described below, and the description of a functional configuration of STA 100 is omitted. Furthermore, this is only an example, and therefore AP 200 and STA 100 may include functional configurations different from each other. For example, AP 200 may separately have a function of controlling a plurality of STAs 100.

As illustrated in Fig. 5, AP 200 includes a communication unit 210, a data processing unit 220, and a controller 230. Then, the communication unit 210 includes an amplifier 211, a wireless interface 212, a signal processing unit 213, a channel estimator 214, and a modulator/demodulator 215. Furthermore, the communication unit 210 functions as a transmitter and a receiver (also including a first receiver and a second receiver), and the controller 230 functions as a determination unit. Note that, when an antenna (a configuration connected to the amplifier 211), the amplifier 211, and the wireless interface 212 form a set, two or more sets may be included (the drawing illustrates, as an example, a case where two or more sets are included).

### (Amplifier 211)

The amplifier 211 performs processing for amplifying a signal. In a more specific description, at the time of reception, the amplifier 211 amplifies a reception signal that has been input from the antenna to a predetermined power, and outputs the signal to the wireless interface 212 described later. Furthermore, at the time of transmission, the amplifier 211 amplifies a transmission signal that has been input from the wireless interface 212 to a predetermined power, and sends out the transmission signal to the antenna. Note that these functions may be implemented by the wireless interface 212.

### (Wireless interface 212)

At the time of reception, the wireless interface 212 performs down-conversion on a reception signal serving as an analog signal provided from the amplifier 211 to obtain a baseband signal, performs various types of processing, such as filtering or conversion to a digital signal, on the baseband signal to generate a received symbol stream, and outputs the received symbol stream to the signal processing unit 213 described later. Furthermore, at the time of transmission, the wireless interface 212 converts an input from the signal processing unit 213 into an analog signal, performs filtering and up-conversion to a carrier frequency band, and sends out the analog signal to the amplifier 211.

### (Signal processing unit 213)

At the time of reception, the signal processing unit 213 performs spatial processing on the received symbol stream provided from the wireless interface 212 to obtain a data symbol stream that is independent for each of the received symbol streams, and provides the data symbol stream to the modulator/demodulator 215 described later. Furthermore, at the time of transmission, the signal processing unit 213 performs spatial processing on the data symbol stream that has been input from the modulator/demodulator 215, and provides one or more obtained transmission symbol streams to each of the wireless interfaces 212.

### (Channel estimator 214)

The channel estimator 214 calculates complex channel gain information of a propagation path from a preamble portion and a training signal portion of the reception signal provided from each of the wireless interfaces 212. The calculated complex channel gain information is used for demodulation processing in the modulator/demodulator 215 and spatial processing in the signal processing unit 213.

### (Modulator/demodulator 215)

At the time of reception, the modulator/demodulator 215 demodulates, deinterleaves, and decodes the data symbol stream provided from the signal processing unit 213 to obtain reception data, and provides the reception data to the data processing unit 220. Furthermore, at the time of transmission, the modulator/demodulator 215 encodes, interleaves, and modulates a frame provided from the data processing unit 220 on the basis of a coding and modulation scheme set by the controller 230 described below to generate a data symbol stream, and provides the stream to the signal processing unit 213.

### (Data processing unit 220)

At the time of reception, the data processing unit 220 performs processing, such as analysis of a media access control (MAC) header for MAC or the detection of an error in a frame, on the reception data provided from the modulator/demodulator 215. Furthermore, at the time of transmission, the data processing unit 220 generates a packet (data) for transmission, performs processing, such as the addition of the MAC header or the addition of an error detection code, on the packet to generate a frame for transmission, and provides the frame to the modulator/demodulator 215.

### (Controller 230)

The controller 230 controls the respective configurations described above. For example, the controller 230 performs processing such as the setting of a parameter to be used in processing of each of the functional configurations described above or scheduling of processing.

Furthermore, in the present disclosure, the controller 230 controls processing relating to interference information and processing based on interference information. For example, the controller 230 controls processing relating to the sharing of interference information. Here, a method for sharing interference information is not particularly limited. With respect to the transmission of interference information, the controller 230 may transmit the interference information to another apparatus in response to a request from the other apparatus, or may voluntarily transmit the interference information to the other apparatus. Similarly with respect to the reception of the interference information, the controller 230 may receive the interference information from another apparatus by transmitting a request to the other apparatus, or may receive the interference information that the other apparatus has voluntarily transmitted.

Furthermore, a timing at which the interference information is shared is not particularly limited. For example, the interference information may be shared in a wireless LAN system in a case where communication quality (this can be paraphrased to various index values such as communication efficiency or communication speed) in the wireless LAN system deteriorates to be less than a predetermined threshold or periodically, before a signal is transmitted or received.

Then, the controller 230 determines the presence or absence of interference with another system on the basis of interference information collected by the local apparatus or interference information provided from the other apparatus, and controls communication of the local apparatus on the basis of a determination result. For example, the controller 230 controls processing relating to changing various types of settings relating to transmission, changing a transmission destination, changing various types of settings relating to reception, or the like on the basis of the interference information. Note that the controller 230 may control communication of another apparatus (STA 100 or the like) in addition to the local apparatus. Details are described later.

### (2-4. Information to be communicated)

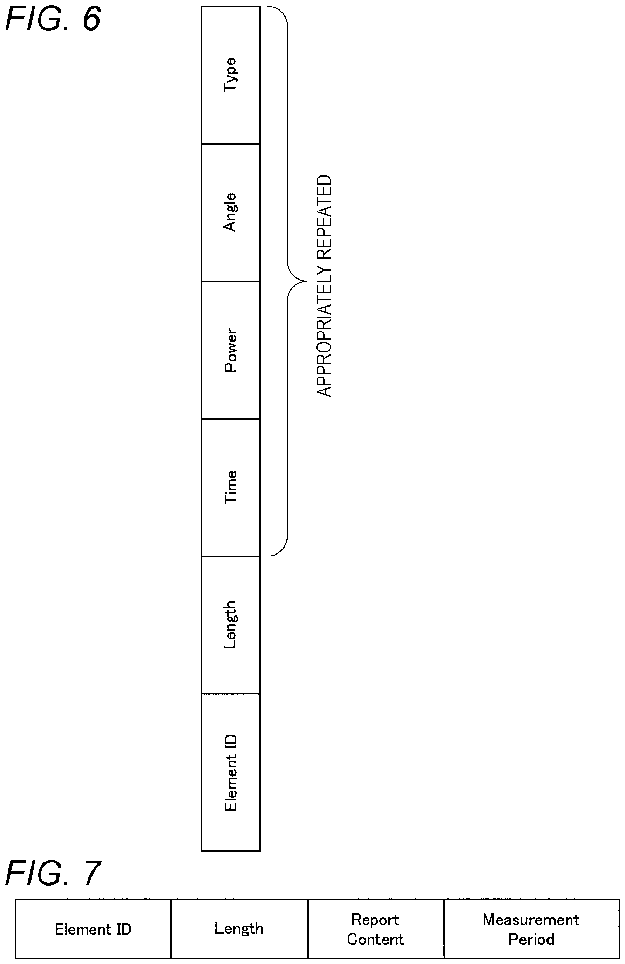

Next, an example of information to be communicated by AP 200 and STA 100 is described with reference to Figs. 6 and 7.

First, an example of a format of a frame in which interference information is stored is described with reference to Fig. 6. As illustrated in Fig. 6, this frame includes "Element ID", "Length", "Time", "Power", "Angle", "Type", or the like. Furthermore, a plurality of pieces of "Time", "Power", "Angle", "Type", or the like may be included in a single frame, or may be omitted as appropriate. Note that this format of the frame is only an example.

"Element ID" is a field in which information indicating that the frame is a frame including interference information (also referred to as an "interference information report") is stored.

"Length" is a field in which information relating to a field length after "Length" is stored.

"Time" is a field in which information relating to the time when power has been received from another system (such as a reception start time or a reception end time; stated another way, an interference occurrence time) is stored. For example, information relating to the time when a reception power value that is greater than a predetermined threshold has started being detected (a reception start time) and information relating to the time when no reception power value that is greater than the threshold has been detected any longer (a reception end time) can be stored. Here, the predetermined threshold may be, for example, a value that has been set in such a way that not only a communication signal of the wireless LAN system but also any type of signal can be detected.

Furthermore, information stored in "Time" is not limited to the above. For example, information relating to the time when a reception power value has changed in addition to the reception start time and the reception end time may be stored in "Time". The reception power value changes according to the number of interference sources, a separation distance from an interference source, a transmission power value of an interference source, or the like. Therefore, a communication apparatus that shares the information relating to the time when the reception power value has changed can recognize a change in the number of interference sources, the separation distance from an interference source, the transmission power value of an interference source, or the like. Note that information expressed by absolute time may be stored in "Time", but this is not restrictive.

"Power" is a field in which information relating to the reception power value (stated another way, the intensity of interference) is stored. For example, an instantaneous value, a maximum value, a mean value, or the like of a reception power value detected at a time indicated in "Time" can be stored in "Power", but this is not restrictive. For example, information relating to whether or not power that exceeds the predetermined threshold described above has been detected, rather than an absolute value of the reception power value, may be stored in "Power", or information indicating which of a plurality of ranges (slots) obtained by sectioning a power value a detected power value falls within may be stored in "Power".

"Angle" is a field in which information relating to a direction from which power has arrived (stated another way, a direction of an interference source) is stored. For example, an angle θ formed by a direction from which power has arrived and a direction in which a transmission destination apparatus of interference information is located, as illustrated in Fig. 4, may be stored in "Angle", but this is not restrictive. For example, three-dimensional angle information may be stored in "Angle". More specifically, an angle θ' formed by a direction from which power has arrived and a horizontal direction may be stored in "Angle". Furthermore, information indicating which of a plurality of ranges (slots) obtained by sectioning an angle the angle θ (or the angle θ') falls within, rather than the absolute value of the angle θ (or the angle θ'), may be stored in "Angle".

"Type" is a field in which information relating to some type of attribute of interference is stored. For example, in a case where a communication apparatus that has detected interference has been able to identify a type, a communication scheme, a version, and the like of another system serving as an interference source according to some type of method, these pieces of information may be stored in "Type". Furthermore, in a case where the communication apparatus has been able to distinguish (identify) another system or an apparatus in another system that serves as an interference source, identification information may be set for the other system or the apparatus in the other system, and the identification information may be stored in "Type".

Note that, in a case where the information described above is stored in a single frame (in particular, in a case where a plurality of pieces of "Time", "Power", "Angle", "Type", or the like is included in a single frame), a frame size increases. Accordingly, each of the communication apparatuses may hold a table obtained by combining two or more pieces of information of "Time", "Power", "Angle", "Type", or the like, and may share interference information by using a method for specifying a record number or the like in the table. With this arrangement, the communication apparatus can reduce the frame size.

Furthermore, the communication apparatus may voluntarily share interference information, as described above, but may share the interference information in response to a request from another apparatus. Accordingly, next, an example of a format of a frame that makes a request for interference information is described with reference to Fig. 7.

As illustrated in Fig. 7, this frame includes "Element ID", "Length", "Report Content", "Measurement Period", or the like. Note that this format of the frame is only an example.

"Element ID" is a field in which information indicating that the frame is a frame that makes a request for interference information is stored.

"Length" is a field in which information relating to a field length after "Length" is stored.

"Report Content" is a field in which information relating to the content of interference information to be requested is stored. For example, information that specifies any of "Time", "Power", "Angle", or "Type" (not restrictive) described above is stored in "Report Content".

"Measurement Period" is a field in which information relating to a period serving as a target for a request is stored. For example, information relating to a start time of a period serving as a target for a request, the length of a target period, or the like is stored in "Measurement Period".

### <3. First example>

The outline of the communication system according to the present disclosure has been described above. Next, a first example according to the present disclosure is described.

The first example is an example in which a communication apparatus changes various types of settings relating to transmission on the basis of interference information.

First, a communication apparatus collects interference information on the basis of power that the local apparatus has received from another system. For example, the communication apparatus stores a reception power value (stated another way, the intensity of interference), the time when the power has been received (a reception start time, a reception end time, or the like; stated another way, an interference occurrence time), a direction from which power has been received (stated another way, a direction of an interference source), or the like. Note that the above is only an example, and the content of interference information to be collected may be changed as appropriate.

Then, respective communication apparatuses store information indicating whether or not the local apparatus corresponds to the present disclosure (stated another way, information relating to whether or not interference information can be transmitted or received or whether or not communication can be controlled based on the interference information; hereinafter referred to as "correspondence capability information") in "Capability Field" in a transmission frame, and transmit the correspondence capability information to each other. With this arrangement, the respective communication apparatuses can grasp whether or not the respective communication apparatuses correspond to the present disclosure. Note that a timing at which the correspondence capability information is communicated is not particularly limited. For example, the correspondence capability information may be communicated in communication performed when STA 100 participates in a basic service set (BSS). Furthermore, the correspondence capability information may be stored in a field other than "Capability Field".

Each of the communication apparatuses mutually shares interference information with another communication apparatus that corresponds to the present disclosure on the basis of the correspondence capability information. Note that only one communication apparatus shares interference information with another communication apparatus, instead of sharing respective pieces of interference information between communication apparatuses.

Then, the communication apparatus changes various types of settings relating to transmission on the basis of the interference information. For example, in a case where a transmission destination apparatus of a signal is receiving interference from another system, the communication apparatus may reduce a transmission rate or improve a transmission power value according to the intensity of the interference, or the like in such a way that communication will succeed at a higher probability. Furthermore, the communication apparatus may change a communication band to be used in communication to a communication band that is different from a communication band used by another system.

Furthermore, the communication apparatus may change an energy detection threshold (hereinafter referred to as "EDT") according to the intensity of interference, or the like. EDT is a threshold that is compared with power that has been detected before the transmission of a signal in order to determine whether or not the signal can be transmitted. In a case where a power value that is greater than EDT has been detected, transmission is postponed. In the present example, the communication apparatus can appropriately determine whether or not a signal can be transmitted by changing EDT according to the intensity of interference that has occurred. In other words, each of the communication apparatuses can avoid transmitting a signal under a situation having a significantly high probability of a failure in communication, or can avoid stopping the transmission of a signal under a situation having a low probability of a failure in communication.

Furthermore, a communication apparatus that will transmit a signal may change the format of a transmission signal in such a way that desired information is transmitted even in a case where a communication apparatus that receives the signal has partially failed to perform processing for receiving the signal. For example, a communication apparatus may store desired information to be transmitted in a physical layer header (such as a PLCP header) rather than a data portion of a transmission signal in such a way that the desired information is transmitted even in a case where a communication apparatus that receives the signal has failed to perform processing (decoding or the like) for receiving the data portion. Furthermore, a communication apparatus may change a communication scheme in such a way that it is determined that processing for receiving the signal has succeeded on the basis of the detection of a reception power that is greater than or equal to a predetermined threshold, the detection of a predetermined signal pattern, or success in only reception processing in some bands of a plurality of frequency bands, even in a case where reception processing has partially failed to be performed. Note that the change content described above is only an example, and may be changed as appropriate.

Furthermore, a communication apparatus may control the processing described above for each transmission destination apparatus, each time, or in each direction from the local apparatus.

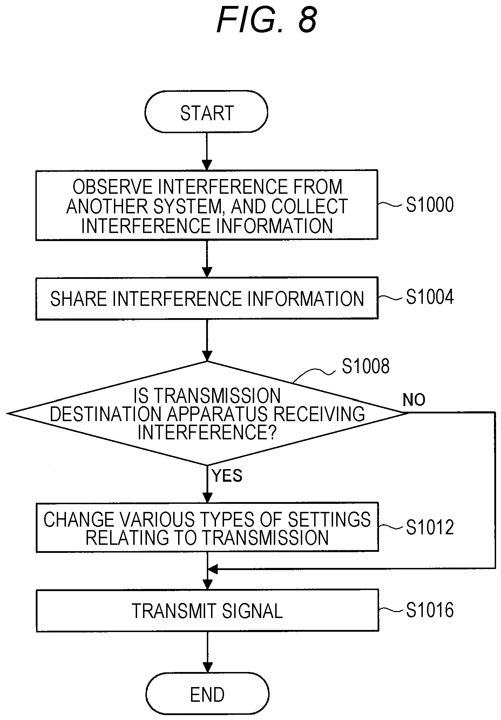

Next, an example of an operation of a communication apparatus in the first example is described with reference to Fig. 8. Note that it is assumed that respective communication apparatuses exchange correspondence capability information with each other in advance so that the respective communication apparatuses mutually recognize that the respective communication apparatuses correspond to the present disclosure.

In step S1000, respective communication apparatuses observe interference from another system, and collect interference information. In step S1004, the respective communication apparatuses share the interference information with each other. For example, in a case where a certain communication apparatus is about to transmit a signal to another communication apparatus and a transmission destination apparatus is receiving interference from another system (step S1008/Yes), a transmission source apparatus changes various types of settings relating to transmission in step S1012, and transmits the signal in step S1016. In step S1008, in a case where the transmission destination apparatus is not receiving interference from another system (step S1008/No), the transmission source apparatus transmits the signal in step S1016 without changing various types of settings relating to transmission. Note that this is only an example. Even in a case where the transmission destination apparatus is not receiving interference from another system (step S1008/No), the transmission source apparatus may appropriately change various types of settings relating to transmission on the basis of the interference information (for example, the transmission source apparatus may increase a transmission rate such that communication efficiency is improved).

In the first example, each of the communication apparatuses can reduce an influence of interference with a terminal in another system that has a hidden-terminal relationship. More specifically, a communication apparatus that has a hidden-terminal relationship with respect to a terminal in another system fails to appropriately avoid interference with the other system even by using interference information collected by the local apparatus. In contrast, in the first example, each of the communication apparatuses can obtain interference information collected by a transmission destination apparatus or the like. Therefore, each of the communication apparatuses can recognize the presence of a terminal in another system that has a hidden-terminal relationship, and can change various types of settings relating to transmission on the basis of the interference information. With this arrangement, each of the communication apparatuses can reduce an influence of interference with the terminal in the other system that has a hidden-terminal relationship.

### <4. Second example>

The first example according to the present disclosure has been described above. Next, a second example according to the present disclosure is described.

The second example is an example in which a communication apparatus changes a transmission destination of a signal on the basis of interference information.

Note that, similarly to the first example, correspondence capability information is shared and interference information is shared on the basis of the correspondence capability information.

In the second example, a transmission source apparatus that makes an attempt to transmit a signal preferentially transmits a signal to a transmission destination apparatus that is not receiving interference from another system. More specifically, the transmission source apparatus grasps an interference state of each of the apparatuses on the basis of interference information, and preferentially transmits the signal to a terminal that has never received interference from another system or a transmission destination apparatus that has not received interference from another system over a predetermined period (the length of the period is arbitrary) or longer.

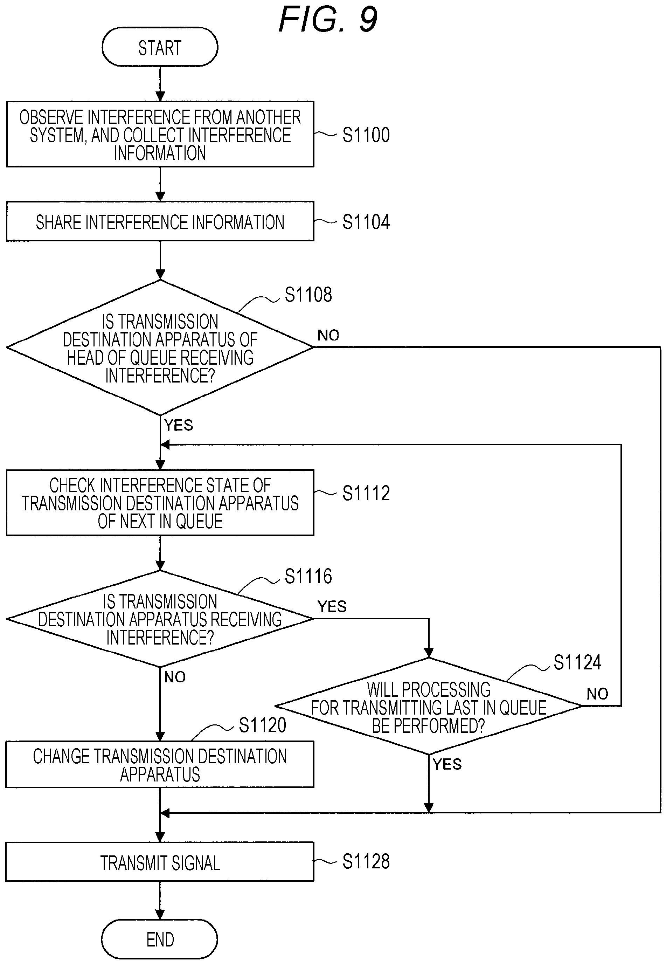

Here, an example of an operation of a communication apparatus in the second example is described with reference to Fig. 9. Note that it is assumed that respective communication apparatuses exchange correspondence capability information with each other in advance so that the respective communication apparatuses mutually recognize that the respective communication apparatuses correspond to the present disclosure.

In step S1100, respective communication apparatuses observe interference from another system, and collect interference information. In step S1104, the respective communication apparatuses share the interference information with each other. Then, in a case where a transmission destination apparatus in processing for transmitting the head of a queue is not receiving interference from another system (step S1108/No), a transmission source apparatus transmits a signal to the transmission destination apparatus in step S1128. Here, the "queue" described above refers to a set of pieces of data for transmission processing in a transmission standby state, and is a concept of managing the order of being transmitted. In contrast, in a case where the transmission destination apparatus in processing for transmitting the head of the queue is receiving interference from another system (step S1108/Yes), the transmission source apparatus checks an interference state of a transmission destination apparatus in processing for transmitting the next in the queue in step S1112.

In a case where the transmission destination apparatus in the processing for transmitting the next in the queue is not receiving interference from another system (step S1116/No), the transmission source apparatus changes a transmission destination apparatus to an apparatus that is not receiving interference in step S1120, and transmits a signal in step S1128.

In step S1116, in a case where the transmission destination apparatus in the processing for transmitting the next in the queue is receiving interference from another system (step S1116/Yes) and the transmission processing is not processing for transmitting the last in the queue (step S1124/No), the processing returns to step S1112. In a case where the transmission destination apparatus in the processing for transmitting the next in the queue is receiving interference from another system (step S1116/Yes) and the transmission processing is processing for transmitting the last in the queue (step S1124/Yes), the transmission source apparatus transmits a signal to the apparatus in step S1128 (or does not have to transmit a signal).

Note that the operation described above is only an example, and the content of an operation can be changed as appropriate. For example, in a case where a transmission destination apparatus is receiving interference, a transmission source apparatus may change a transmission destination apparatus according to a result of a comparison between a power value that the transmission destination apparatus is receiving from another system (stated another way, the intensity of interference) and a predetermined threshold. Here, the predetermined threshold refers to, for example, a value calculated from a required signal-to-interference plus noise power ratio (SINR), a transmission power value in the current settings, or the like, and may be an allowable reception power value from another system. Then, the transmission source apparatus may preferentially transmit a signal to a transmission destination apparatus that is not receiving a power that is greater than the predetermined threshold from another system.

Furthermore, the transmission source apparatus may predict an interference state at the time of transmission on the basis of interference information, and may preferentially transmit a signal to a transmission destination apparatus predicted not to receive interference from another system at the time of transmission. For example, in a case where the transmission source apparatus has discovered on the basis of interference information that the occurrence of interference has periodicity, the transmission source apparatus can predict an interference state at a point in time of transmission in the future. In this case, the transmission source apparatus can preferentially transmit a signal to a transmission destination apparatus predicted not to receive interference at the time of transmission (or to have a high probability of not receiving interference).

Furthermore, the transmission source apparatus does not always need to perform the processing described above by using interference information from a transmission destination apparatus. More specifically, in a case where the transmission source apparatus has been able to estimate a position or a direction in which an interference source exists on the basis of interference information shared with a communication apparatus other than a transmission destination apparatus or interference information collected by the local apparatus, the transmission source apparatus may select a transmission destination apparatus to which a signal is preferentially transmitted on the basis of this estimation result. For example, in a case where it is estimated that an interference source exists in a predetermined direction from the transmission source apparatus, the transmission source apparatus may transmit a signal preferentially from a transmission destination apparatus located in a direction far from the predetermined direction.

In the second example, a transmission source apparatus can select a more appropriate transmission destination apparatus on the basis of interference information, and this results in a reduction in an influence of interference with another system.

### <5. Third example>

The second example according to the present disclosure has been described above. Next, a third example according to the present disclosure is described.

The third example is an example in which a communication apparatus changes various types of settings relating to reception on the basis of interference information.

Note that, similarly to the first example and the second example, correspondence capability information is shared and interference information is shared on the basis of the correspondence capability information.

In the third example, the setting content that is changed on the basis of the interference information is not particularly limited, but a case where a threshold used to detect power (hereinafter referred to as a "power detection threshold") is changed is described as an example below. For example, a communication apparatus can change a power detection threshold on the basis of interference information shared with another communication apparatus in such a way that the local apparatus can also detect power from another system that the other communication apparatus has detected.

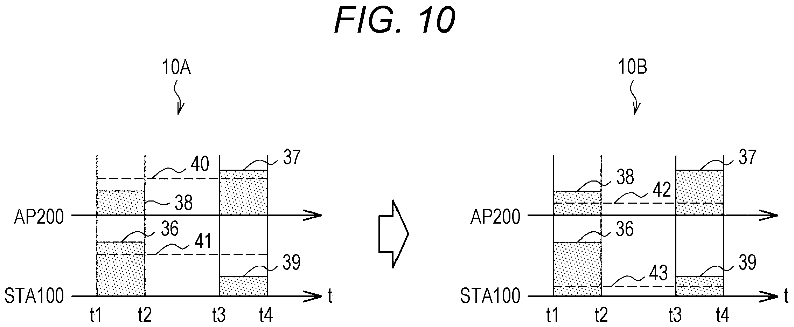

Here, an example of a case where the third example is applied is described with reference to Fig. 10. Similarly to Fig. 3, in Fig. 10, a horizontal axis indicates time (t), and a width in a vertical axis direction of each interference indicates the magnitude of a reception power value. As illustrated as 10A, in a time zone from time t1 to time t2, the power of interference 38 is less than a power detection threshold 40 of AP 200, and therefore AP 200 fails to detect the interference 38. In contrast, the power of interference 36 is greater than a power detection threshold 41 of STA 100, and therefore STA 100 can detect the interference 36. Furthermore, in a time zone from time t3 to time t4, the power of interference 37 is greater than the power detection threshold 40 of AP 200, and therefore AP 200 can detect the interference 37. In contrast, the power of interference 39 is less than the power detection threshold 41 of STA 100, and therefore STA 100 fails to detect the interference 36. AP 200 and STA 100 recognize the state illustrated as 10A by sharing interference information with each other.

With this arrangement, AP 200 and STA 100 can recognize the presence of a terminal in another system that has a hidden-terminal relationship. Then, AP 200 and STA 100 in the present example can control reception so as to be able to detect power from the terminal in the other system that has a hidden-terminal relationship.

For example, AP 200 and STA 100 reduce a power detection threshold on the basis of the interference information so as to be able to detect the power from the terminal in the other system. With this arrangement, as illustrated as 10B, AP 200 can detect interference 38 from the same interference source as an interference source of the interference 36 that STA 100 has detected by using a reduced power detection threshold 42 in the time zone from time 1 to time t2. Furthermore, STA 100 can detect interference 39 from the same interference source as an interference source of the interference 37 that AP 200 has detected by using a reduced power detection threshold 43 in the time zone from time 3 to time t4.

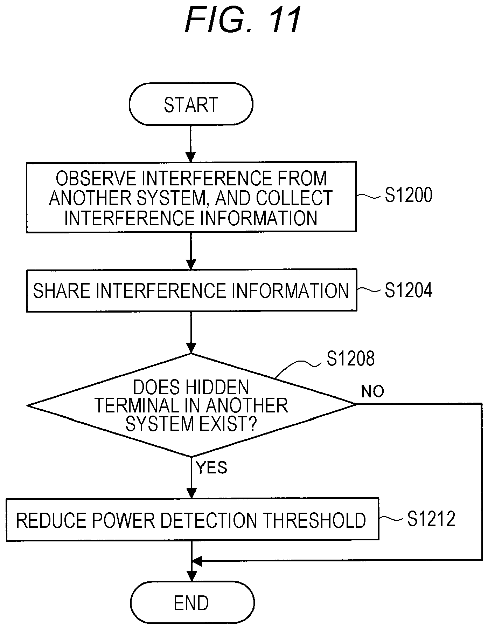

Here, an example of an operation of a communication apparatus in the third example is described with reference to Fig. 11. Note that it is assumed that respective apparatuses exchange correspondence capability information with each other in advance so that the respective communication apparatuses mutually recognize that the respective communication apparatuses correspond to the present disclosure.

In step S1200, respective communication apparatuses observe interference from another system, and collect interference information. In step S1204, the respective communication apparatuses share the interference information with each other. Then, in a case where there is a terminal in another system that has a hidden-terminal relationship (step S1208/Yes), the communication apparatus reduces a power detection threshold to the extent to which power from the terminal in the other system can be received in step S1212. In a case where there are no terminals in another system that have a hidden-terminal relationship (step S1208/ No), the communication apparatus does not reduce the power detection threshold.

In the third example, a communication apparatus can recognize the presence of a terminal in another system that has a hidden-terminal relationship on the basis of interference information shared with another communication apparatus. Then, the communication apparatus performs control, for example, to reduce the power detection threshold in such a way that the local apparatus can detect power from the terminal in the other system that has a hidden-terminal relationship. Thus, the communication apparatus can autonomously perform control to reduce an influence of interference.

Note that the processing described above is only an example, and is not particularly restrictive. For example, the communication apparatus may determine a lower limit of the power detection threshold in advance such that unnecessary noise is not detected due to an excessive reduction in the power detection threshold.

### <6. Application examples>

The technique according to the present disclosure can be applied to a variety of products. For example, STA 100 may be implemented as a smartphone, a tablet personal computer (PC), a laptop PC, a mobile terminal such as a portable game terminal or a digital camera, a television receiver, a printer, a fixed terminal such as a digital scanner or a network storage, or an on-vehicle terminal such as a car navigation device. Furthermore, STA 100 may be implemented as a terminal that performs machine-to-machine (M2M) communication (also referred to as a machine type communication (MTC) terminal) such as a smart meter, a vending machine, a remote monitoring device, or a point-of-sale (POS) terminal. Moreover, STA 100 may be a wireless communication module (for example, an integrated circuit module configured by a single die) that is mounted in these terminals.

In contrast, for example, AP 200 may be implemented as a wireless LAN access point (also referred to as a wireless base station) that has a router function or does not have the router function. Furthermore, AP 200 may be implemented as a mobile wireless LAN router. Moreover, AP 200 may be a wireless communication module (for example, an integrated circuit module configured by a single die) that is mounted in these terminals.

### [6-1. First application example]

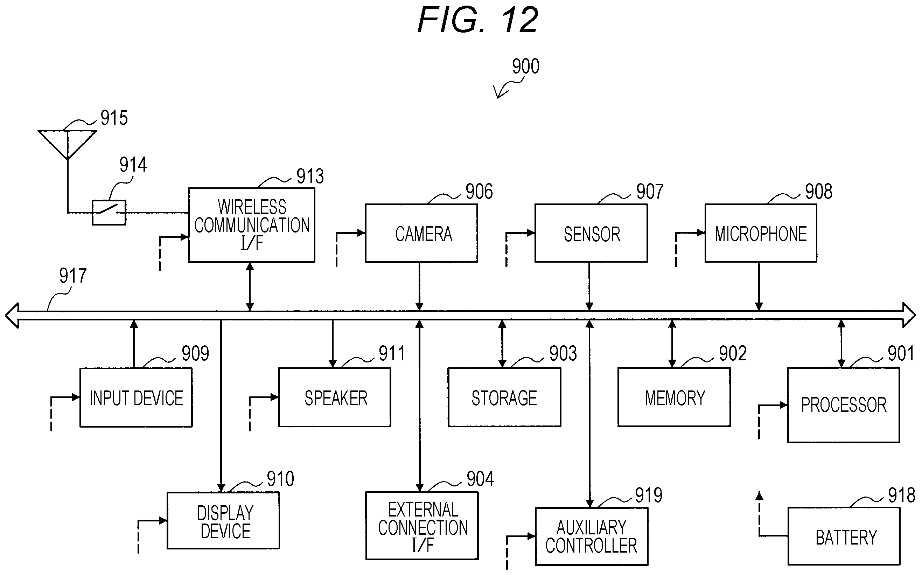

Fig. 12 is a block diagram illustrating an example of a schematic configuration of a smartphone 900 to which the technique according to the present disclosure can be applied. The smartphone 900 includes a processor 901, a memory 902, a storage 903, an external connection interface 904, a camera 906, a sensor 907, a microphone 908, an input device 909, a display device 910, a speaker 911, a wireless communication interface 913, an antenna switch 914, an antenna 915, a bus 917, a battery 918, and an auxiliary controller 919.

The processor 901 may be, for example, a central processing unit (CPU) or a system on chip (SoC), and controls functions of an application layer of the smartphone 900 and another layer. The memory 902 includes a random access memory (RAM) and a read-only memory (ROM), and stores a program executed by the processor 901 and data. The storage 903 can include a storage medium such as a semiconductor memory or a hard disk. The external connection interface 904 is an interface that is used to connect an external device, such as a memory card or a universal serial bus (USB) device, to the smartphone 900.

The camera 906 includes, for example, an imaging element such as a charge coupled device (CCD) or a complementary metal oxide semiconductor (CMOS), and generates a captured image. The sensor 907 can include, for example, a sensor group of a positioning sensor, a gyro sensor, a geomagnetic sensor, an acceleration sensor, and the like. The microphone 908 converts sound input to the smartphone 900 to a sound signal. The input device 909 includes, for example, a touch sensor that detects a touch on a screen of the display device 910, a key pad, a keyboard, a button, a switch, or the like, and receives an operation or an input of information from a user. The display device 910 includes a screen such as a liquid crystal display (LCD) or an organic light-emitting diode (OLED) display, and displays an output image of the smartphone 900. The speaker 911 converts a sound signal output from the smartphone 900 to sound.

The wireless communication interface 913 supports one or more of wireless LAN standards, such as IEEE 802.11a, 11b, 11g, 11n, 11ac, and 11ad, and performs wireless communication. The wireless communication interface 913 can communicate with another device via a wireless LAN access point in an infrastructure mode. Furthermore, the wireless communication interface 913 can directly communicate with another device in a direct communication mode such as an ad-hoc mode or Wi-Fi Direct (registered trademark). Note that, in Wi-Fi Direct, one of two terminals operates as an access point unlikely to the ad-hoc mode, but communication is directly performed between these terminals. The wireless communication interface 913 can typically include a baseband processor, a radio frequency (RF) circuit, a power amplifier, and the like. The wireless communication interface 913 may be a one-chip module in which a memory that stores a communication control program, a processor that executes the program, and a relating circuit have been integrated. The wireless communication interface 913 may support another type of wireless communication scheme, such as a short-range wireless communication scheme, a proximity wireless communication scheme, or a cellular communication scheme, in addition to a wireless LAN scheme. The antenna switch 914 switches a connection destination of the antenna 915 between a plurality of circuits (for example, circuits for wireless communication schemes different from each other) that are included in the wireless communication interface 913. The antenna 915 includes a single antenna element or a plurality of antenna elements (for example, a plurality of antenna elements that configure a MIMO antenna), and is used for the wireless communication interface 913 to transmit and receive a wireless signal.

Note that the example of Fig. 12 is not restrictive, and the smartphone 900 may include a plurality of antennas (for example, an antenna for a wireless LAN, an antenna for the proximity wireless communication scheme, and the like). In this case, the antenna switch 914 may be omitted from the configuration of the smartphone 900.

The bus 917 mutually connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919. The battery 918 supplies power to respective blocks of the smartphone 900 that are illustrated in Fig. 12 via a feed line that is partially illustrated with a broken line in the drawing. The auxiliary controller 919 causes minimum necessary functions of the smartphone 900 to operate, for example, in a sleep mode.

Note that the smartphone 900 may operate as a wireless access point (a software AP) by the processor 901 performing an access point function at an application level. Furthermore, the wireless communication interface 913 may have a wireless access point function.

### [6-2. Second application example]

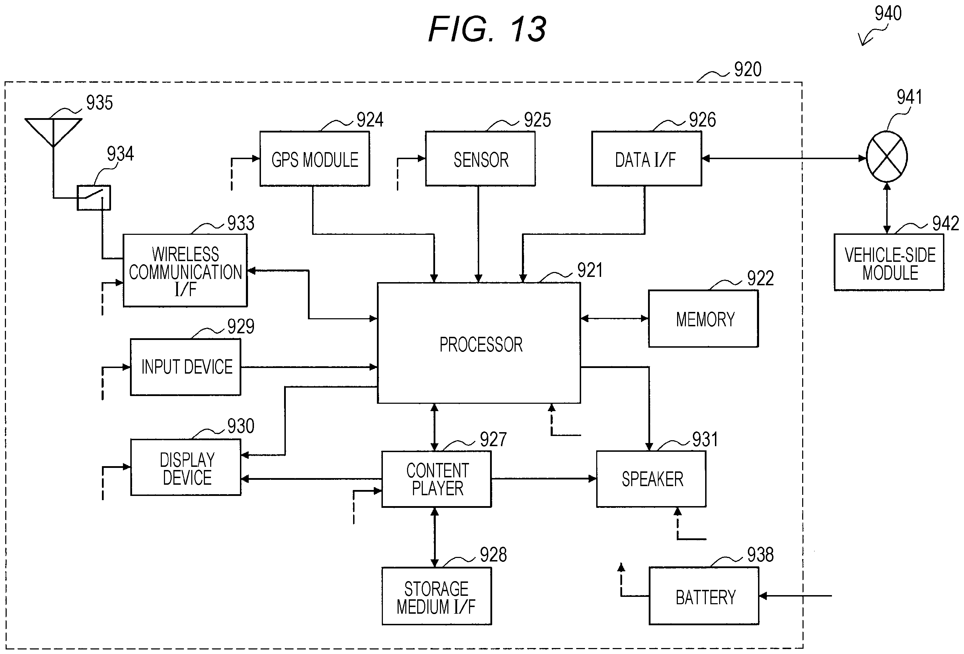

Fig. 13 is a block diagram illustrating an example of a schematic configuration of a car navigation device 920 to which the technique according to the present disclosure can be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the car navigation device 920. The memory 922 includes a RAM and a ROM, and stores a program executed by the processor 921 and data.

The GPS module 924 measures a position (for example, latitude, longitude and altitude) of the car navigation device 920 by using a GPS signal received from a GPS satellite. The sensor 925 can include, for example, a sensor group of a gyro sensor, a geomagnetic sensor, an atmospheric pressure sensor, and the like. The data interface 926 is connected, for example, to an on-vehicle network 941 via a not-illustrated terminal, and obtains data to be generated on a vehicle side, such as vehicle speed data.

The content player 927 reproduces the content stored in a storage medium (such as a CD or a DVD) that has been inserted into the storage medium interface 928. The input device 929 includes, for example, a touch sensor that detects a touch on a screen of the display device 930, a button, a switch, or the like, and receives an operation or an input of information from a user. The display device 930 includes a screen such as an LCD or an OLED display, and displays an image of a navigation function or the reproduced content. The speaker 931 outputs sound of the navigation function or the reproduced content.

The wireless communication interface 933 supports one or more of wireless LAN standards, such as IEEE 802.11a, 11b, 11g, 11n, 11ac, and 11ad, and performs wireless communication. The wireless communication interface 933 can communicate with another device via a wireless LAN access point in an infrastructure mode. Furthermore, the wireless communication interface 933 can directly communicate with another device in a direct communication mode such as an ad-hoc mode or Wi-Fi Direct. The wireless communication interface 933 can typically include a baseband processor, an RF circuit, a power amplifier, and the like. The wireless communication interface 933 may be a one-chip module in which a memory that stores a communication control program, a processor that executes the program, and a relating circuit have been integrated. The wireless communication interface 933 may support another type of wireless communication scheme, such as a short-range wireless communication scheme, a proximity wireless communication scheme, or a cellular communication scheme, in addition to a wireless LAN scheme. The antenna switch 934 switches a connection destination of the antenna 935 between a plurality of circuits included in the wireless communication interface 933. The antenna 935 includes a single antenna element or a plurality of antenna elements, and is used for the wireless communication interface 933 to transmit and receive a wireless signal.

Note that the example of Fig. 13 is not restrictive, the car navigation device 920 may include a plurality of antennas. In this case, the antenna switch 934 may be omitted from the configuration of the car navigation device 920.

The battery 938 supplies power to respective blocks of the car navigation device 920 that are illustrated in Fig. 13 via a feed line that is partially illustrated with a broken line in the drawing. Furthermore, the battery 938 accumulates power supplied from a vehicle side.

Furthermore, the wireless communication interface 933 may operate as AP 200 described above and provide wireless connection to a terminal possessed by a user in a vehicle.

Furthermore, the technique according to the present disclosure may be implemented as an on-vehicle system (or a vehicle) 940 including one or more blocks of the car navigation device 920 described above, the on-vehicle network 941, and a vehicle-side module 942. The vehicle-side module 942 generates vehicle-side data such as vehicle speed, engine speed, or failure information, and outputs the generated data to the on-vehicle network 941.

### [6-3. Third application example]

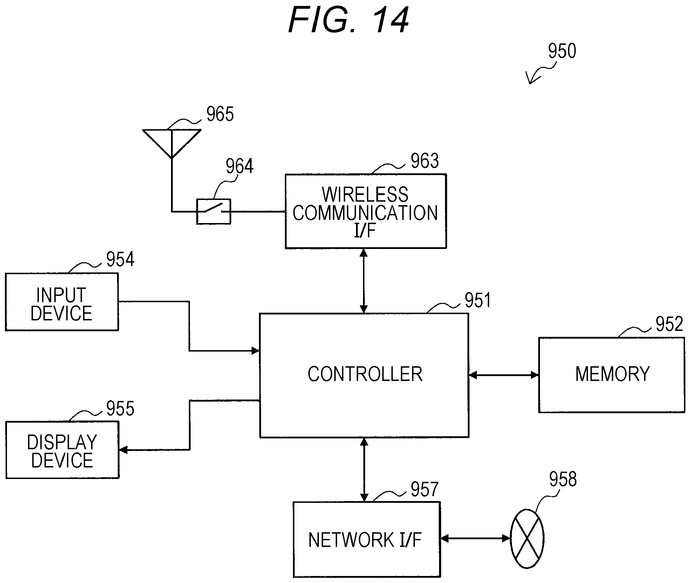

Fig. 14 is a block diagram illustrating an example of a schematic configuration of a wireless access point 950 to which the technique according to the present disclosure can be applied. The wireless access point 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and causes various functions (for example, access restriction, routing, encryption, firewall, log management, and the like) of an internet protocol (IP) layer and a higher-order layer of the wireless access point 950 to be operated. The memory 952 includes a RAM and a ROM, and stores a program executed by the controller 951 and various types of control data (for example, a terminal list, a routing table, a cryptographic key, security settings, a log, and the like).

The input device 954 includes, for example, a button, a switch, or the like, and receives an operation of a user. The display device 955 includes an LED lamp and the like, and displays an operation status of the wireless access point 950.

The network interface 957 is a wired communication interface that is used for the wireless access point 950 to establish connection to a wired communication network 958. The network interface 957 may include a plurality of connection terminals. The wired communication network 958 may be a LAN such as Ethernet (registered trademark), or may be a wide area network (WAN).

The wireless communication interface 963 supports one or more of wireless LAN standards, such as IEEE 802.11a, 11b, 11g, 11n, 11ac, and 11ad, and provides as an access point wireless communication to a nearby terminal. The wireless communication interface 963 can typically include a baseband processor, an RF circuit, a power amplifier, and the like. The wireless communication interface 963 may be a one-chip module in which a memory that stores a communication control program, a processor that executes the program, and a relating circuit have been integrated. The antenna switch 964 switches a connection destination of the antenna 965 between a plurality of circuits included in the wireless communication interface 963. The antenna 965 includes a single antenna element or a plurality of antenna elements, and is used for the wireless communication interface 963 to transmit and receive a wireless signal.

### <7. Conclusion>

As described above, a communication apparatus according to the present disclosure determines the presence or absence of interference from another system by receiving power from the other system, and shares interference information with another communication apparatus. With this arrangement, each of the communication apparatuses can grasp the state of interference that another communication apparatus is receiving. Furthermore, in a case where there is a plurality of other systems that is generating interference, the communication apparatus according to the present disclosure can distinguish (identify) the other systems that are generating interference or apparatuses serving as an interference source in the other systems from each other.

Then, the communication apparatus according to the present disclosure can control communication in a wireless LAN system on the basis of interference information. For example, the communication apparatus performs changing various types of settings relating to transmission, changing a transmission destination, changing various types of settings relating to reception, or the like on the basis of the interference information. With this arrangement, the communication apparatus can suppress the occurrence of interference with another system, or can reduce an influence of interference.

A preferred embodiment of the present disclosure has been described in detail above with reference to the attached drawings, but the technical scope of the present disclosure is not limited to the examples described above. It is obvious that a person with ordinary skill in the art to which the present disclosure pertains could conceive a variety of variations or modifications without departing from a technical idea described in the claims, and it should be understood that the variations or modifications fall under the technical scope of the present disclosure.

For example, the processes of respective steps in respective flowcharts described above do not always need to be performed in time series in the order described as the flowcharts. In other words, the processes of the respective steps may be performed in an order that is different from the order described as the flowcharts, or may be performed in parallel.

Furthermore, a portion of the functional configuration of AP 200 or STA 100 may be provided in an external apparatus, as appropriate. Furthermore, some of the functions of AP 200 may be embodied by the controller 230. For example, the controller 230 may embody some of the functions of the communication unit 210 or the data processing unit 220. Furthermore, some of the functions of STA 100 may be embodied by the controller 130. For example, the controller 130 may embody some of the functions of the communication unit 110 or the data processing unit 120.

Furthermore, effects described herein are only exemplary or illustrative, and are not restrictive. That is, a technique according to the present disclosure can exhibit other effects that would be obvious to those skilled in the art from the description provided herein in addition to the effects described above or instead of the effects described above.

Note that the configuration described below also falls under the technical scope of the present disclosure.
(1) A communication apparatus including:
   a receiver that performs reception of power from another system;
   a determination unit that determines presence or absence of interference with the other system on the basis of the reception; and
   a transmitter that transmits first interference information including information relating to the interference to another communication apparatus.
(2) The communication apparatus described in (1) described above,
   in which the other system includes a wireless communication system in which a communication scheme different from a communication scheme of a system that a local apparatus and the other communication apparatus participate in is used.
(3) The communication apparatus described in (1) or (2) described above,
   in which the receiver also receives second interference information including information relating to interference that has been detected by the other communication apparatus.
(4) The communication apparatus described in (3) described above,
   in which the transmitter also transmits the second interference information to a communication apparatus other than the other communication apparatus.
(5) The communication apparatus described in (3) or (4) described above, further including:
   a controller that performs control on communication on the basis of either the first interference information or the second interference information.
(6) The communication apparatus described in (5) described above,
   in which the transmitter also transmits, to the other communication apparatus, information relating to whether or not the first interference information can be transmitted, information relating to whether or not the second interference information can be received, or information relating to whether or not the control can be performed.
(7) The communication apparatus described in (5) described above,
   in which the receiver also receives, from the other communication apparatus, information relating to whether or not the other communication apparatus can receive the first interference information, information relating to whether or not the other communication apparatus can transmit the second interference information, or information relating to whether or not the other communication apparatus can perform the control.
(8) The communication apparatus described in (7) described above,
   in which in a case where the other communication apparatus can receive the first interference information, in a case where the other communication apparatus can transmit the second interference information, or in a case where the other communication apparatus can perform the control, the transmitter transmits the first interference information to the other communication apparatus.
(9) The communication apparatus described in any one of (1) to (8) described above,
   in which the transmitter transmits, as the first interference information, at least one of a reception power value, a reception time of the power, an arrival direction of the power, or information relating to an attribute of the other system.
(10) The communication apparatus described in any one of (1) to (8) described above,
   in which the transmitter transmits, as the first interference information, information indicating a combination of two or more of a reception power value, a reception time of the power, an arrival direction of the power, or information relating to an attribute of the other system.
(11) A communication apparatus including:
   a receiver that performs reception of power from another system, and receives first interference information including information relating to the interference from another communication apparatus that determines presence or absence of interference with the other system on the basis of the reception; and
   a controller that controls communication on the basis of the first interference information.
(12) The communication apparatus described in (11) described above,
   in which the other system includes a wireless communication system in which a communication scheme different from a communication scheme of a system that a local apparatus and the other communication apparatus participate in is used.
(13) The communication apparatus described in (11) or (12) described above,
   in which the controller distinguishes a plurality of the other systems or a plurality of apparatuses that participate in the other system from each other on the basis of the first interference information.
(14) The communication apparatus described in any one of (11) to (13) described above,
   in which the controller changes settings relating to transmission on the basis of the first interference information.
(15) The communication apparatus described in (14) described above,
   in which the controller changes at least one of a transmission rate, a transmission power value, a communication band, or a transmission destination apparatus.
(16) The communication apparatus described in any one of (11) to (13) described above,
   in which the controller changes settings relating to reception on the basis of the first interference information.
(17) The communication apparatus described in (16) described above,
   in which the controller changes a threshold to be used to detect the power.
(18) The communication apparatus described in (17) described above,
   in which the controller reduces the threshold to a value by which interference is detected, the interference having been detected by the other communication apparatus but not having been detected by a local apparatus.
(19) The communication apparatus described in any one of (11) to (18) described above,
   in which the receiver also performs the reception of the power from the other system,
   a determination unit is further included that determines presence or absence of interference between a local apparatus and the other system on the basis of the reception, and
   the controller also controls the communication on the basis of second interference information including information relating to the interference between the local apparatus and the other system.
(20) A communication system including a first communication apparatus and a second communication apparatus,
   in which the first communication apparatus includes:
   a first receiver that performs reception of power from another system;
   a determination unit that determines presence or absence of interference with the other system on the basis of the reception; and
   a transmitter that transmits first interference information including information relating to the interference to the second communication apparatus, and
   the second communication apparatus includes:
   a second receiver that receives the first interference information from the first communication apparatus; and
   a controller that controls communication on the basis of the first interference information.
(21) A communication method performed by a computer, the communication method including:
   performing reception of power from another system;
   determining presence or absence of interference with the other system on the basis of the reception; and
   transmitting first interference information including information relating to the interference to another communication apparatus.
(22) A communication method performed by a computer, the communication method including:
   performing reception of power from another system, and receiving first interference information including information relating to the interference from another communication apparatus that determines presence or absence of interference with the other system on the basis of the reception; and
   controlling communication on the basis of the first interference information.

### REFERENCE SIGNS LIST

- 100: STA
- 200: AP
- 110, 210: Communication unit
- 111, 211: Amplifier
- 112, 212: Wireless interface
- 113, 213: Signal processing unit
- 114, 214: Channel estimator
- 115, 215: Modulator/demodulator
- 120, 220: Data processing unit
- 130, 230: Controller

## Claims

1. A communication apparatus comprising:
a receiver that performs reception of power from another system;
a determination unit that determines presence or absence of interference with the other system on a basis of the reception; and
a transmitter that transmits first interference information including information relating to the interference to another communication apparatus.

2. The communication apparatus according to claim 1,
wherein the other system includes a wireless communication system in which a communication scheme different from a communication scheme of a system that a local apparatus and the other communication apparatus participate in is used.

3. The communication apparatus according to claim 1,
wherein the receiver also receives second interference information including information relating to interference that has been detected by the other communication apparatus.

4. The communication apparatus according to claim 3,
wherein the transmitter also transmits the second interference information to a communication apparatus other than the other communication apparatus.

5. The communication apparatus according to claim 3, further comprising:
a controller that performs control on communication on a basis of either the first interference information or the second interference information.

6. The communication apparatus according to claim 5,
wherein the transmitter also transmits, to the other communication apparatus, information relating to whether or not the first interference information can be transmitted, information relating to whether or not the second interference information can be received, or information relating to whether or not the control can be performed.

7. The communication apparatus according to claim 5,
wherein the receiver also receives, from the other communication apparatus, information relating to whether or not the other communication apparatus can receive the first interference information, information relating to whether or not the other communication apparatus can transmit the second interference information, or information relating to whether or not the other communication apparatus can perform the control.

8. The communication apparatus according to claim 7,
wherein in a case where the other communication apparatus can receive the first interference information, in a case where the other communication apparatus can transmit the second interference information, or in a case where the other communication apparatus can perform the control, the transmitter transmits the first interference information to the other communication apparatus.

9. The communication apparatus according to claim 1,
wherein the transmitter transmits, as the first interference information, at least one of a reception power value, a reception time of the power, an arrival direction of the power, or information relating to an attribute of the other system.

10. The communication apparatus according to claim 1,
wherein the transmitter transmits, as the first interference information, information indicating a combination of two or more of a reception power value, a reception time of the power, an arrival direction of the power, or information relating to an attribute of the other system.

11. A communication apparatus comprising:
a receiver that performs reception of power from another system, and receives first interference information including information relating to the interference from another communication apparatus that determines presence or absence of interference with the other system on a basis of the reception; and
a controller that controls communication on a basis of the first interference information.

12. The communication apparatus according to claim 11,
wherein the other system includes a wireless communication system in which a communication scheme different from a communication scheme of a system that a local apparatus and the other communication apparatus participate in is used.

13. The communication apparatus according to claim 11,
wherein the controller distinguishes a plurality of the other systems or a plurality of apparatuses that participate in the other system from each other on a basis of the first interference information.

14. The communication apparatus according to claim 11,
wherein the controller changes settings relating to transmission on a basis of the first interference information.

15. The communication apparatus according to claim 14,
wherein the controller changes at least one of a transmission rate, a transmission power value, a communication band, or a transmission destination apparatus.

16. The communication apparatus according to claim 11,
wherein the controller changes settings relating to reception on a basis of the first interference information.

17. The communication apparatus according to claim 16,
wherein the controller changes a threshold to be used to detect the power.

18. The communication apparatus according to claim 17,
wherein the controller reduces the threshold to a value by which interference is detected, the interference having been detected by the other communication apparatus but not having been detected by a local apparatus.

19. The communication apparatus according to claim 11,
wherein the receiver also performs the reception of the power from the other system,
a determination unit is further included that determines presence or absence of interference between a local apparatus and the other system on a basis of the reception, and
the controller also controls the communication on a basis of second interference information including information relating to the interference between the local apparatus and the other system.

20. A communication system comprising a first communication apparatus and a second communication apparatus,
wherein the first communication apparatus includes:
a first receiver that performs reception of power from another system;
a determination unit that determines presence or absence of interference with the other system on a basis of the reception; and
a transmitter that transmits first interference information including information relating to the interference to the second communication apparatus, and
the second communication apparatus includes:
a second receiver that receives the first interference information from the first communication apparatus; and
a controller that controls communication on a basis of the first interference information.
